## Europäisches Patentamt

## European Patent Office

## Office européen des brevets

(19)

(11) Veröffentlichungsnummer: **0 141 270**
**B1**

(12)

# EUROPÄISCHE PATENTSCHRIFT

(45) Veröffentlichungstag der Patentschrift:
**28.12.88**

(51) Int. Cl.⁴: **B 60 B 33/02**

(21) Anmeldenummer: **84111784.4**

(22) Anmeldetag: **02.10.84**

(54) **Zentrale Feststellvorrichtung für an verfahrbaren Geräten, Behältern od. dgl. zu befestigenden Lenk- oder Bockrollen.**

(30) Priorität: **14.10.83 DE 8329706 U**

(43) Veröffentlichungstag der Anmeldung:
**15.05.85 Patentblatt 85/20**

(45) Bekanntmachung des Hinweises auf die Patenterteilung:
**28.12.88 Patentblatt 88/52**

(84) Benannte Vertragsstaaten:
**CH DE FR IT LI NL**

(56) Entgegenhaltungen:
**DE-A- 2 520 097**
**FR-A- 2 200 123**

(73) Patentinhaber: **Haco-Rollen-Vertrieb GmbH & Co. KG,
Am Krupin 15, D-5632 Wermelskirchen-Tente (DE)**

(72) Erfinder: **Haussels, Berthold, Am Krupin 15,
D-5632 Wermelskirchen (DE)**

(74) Vertreter: **Sturies, Herbert et al, Patentanwälte Dr. Ing.
Dipl. Phys. Herbert Sturies Dipl. Ing. Peter Eichler
Postfach 20 12 42, D-5600 Wuppertal 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Neuerung bezieht sich auf eine zentrale Feststellvorrichtung für an verfahrbaren Geräten, Behältern od.dgl. zu befestigenden Lenk- oder Bockrollen, die mit je einem das Rollen-Schwenklager zentral durchdringenden und über ihre Befestigungsplatte nach oben hinausragenden Stellbolzen sowie einer letzteren vertikal verstellenden, in einem an einer auf der Befestigungsplatte angebrachten Lagerplatte vorhandenen Lagerkopf drehbeweglich gelagerten Betätigungsnuss mit Exzenternocken und Innensechskantöffnung versehen sind, wobei eine die zu zwei hintereinander liegenden Lenk- oder Backrollen gehörenden Betätigungsnüsse miteinander verbindende, durch deren Innensechskantöffnungen hindurchgesteckte Sechskantwelle mit einem Fusspedal und einem zwischen den Lagerköpfen der beiden Rollen gelegenen Schutzmantel für die Sechskantwelle vorhanden ist.

Zentrale Feststellvorrichtungen obiger Art sind bekannt. Sie ermöglichen die gemeinsame Feststellung oder das Lösen zweier in Fahrrichtung des Behälters hinter oder auch nebeneinander angeordneter Lenk- oder Bockrollen mittels der ihre Betätigungsnüsse durchdringenden Sechskantwelle. Um diese gegen die oft sehr rauhen Beanspruchungen, denen solche Behälter unterworfen sind, zu schützen, ist bei den bekannten Vorrichtungen dieser Art der Schutzmantel als U-förmige Abdeckschiene ausgebildet, die die Sechskantwelle abdeckt und an ihren Enden mit der Lagerplatte über besondere Lagerkonsolen verschraubt ist. Auch die übrigen Teile der bekannten gattungsgemässen Feststellvorrichtungen sind in ähnlich umständlicher Weise miteinander verbunden. Es sind auch Feststellvorrichtungen obiger Art bekannt die keinen Schutzmantel für die Sechskantwelle aufweisen (z.B. FR-A-2 200 123).

Der Neuerung liegt die Aufgabe zugrunde, eine zentrale Feststellvorrichtung der in Rede stehenden Gattung zu schaffen, bei der insbesondere die zwischen den beiden Lenk- oder Bockrollen gelegenen Vorrichtungteile, vor allem auch der Schutzmantel, einfacher ausgebildet, leichter zu montieren und auch grösseren Beanspruchungen besser gewachsen sind. Diese Aufgabe wird neuerungsgemäss im wesentlichen dadurch gelöst, dass der Schutzmantel rohrförmig ausgebildet und in an den einander zugewandten Enden der Lagerplatte vorhandenen, abgewinkelten ring- oder teilringförmigen Einsteckhalterungen gelagert ist. Auf diese Weise kommt man zu einem wirksameren, weil auch höheren Beanspruchungen gewachsenen Schutz der Sechskantwelle, wobei der Schutzmantel wie auch die übrigen Teile ausserordentlich leicht, nämlich durch blosses Zusammenstecken der betreffenden Teile zu montieren sind.

Dabei kann das Schutzmantelrohr die durchgehende Sechskantwelle konzentrisch umgeben und an seinen im Innendurchmesser verengten Durchtrittsenden jeweils mit einem Innenkonus für das leichtere Durchstecken der Sechskantwelle versehen sein. Es kann aber das Schutzmantelrohr auch mit an seinen Enden angebrachten, koaxial zueinander liegenden Sechskant-Endstücken versehen sein, mit denen zusammen es die schutzmantelverstärkte Sechskantwelle bildet.

Nach einem weiteren Merkmal der Neuerung ist das Fusspedal mit einer eine Innensechskantöffnung aufweisenden Nabe versehen und darüber auf das eine Ende der Sechskantwelle aufgesteckt und zugleich an einem an der Lagerplatte vorhandenen Auflagevorsprung abgestützt. Auf diese Weise kann auch das Fusspedal einfach auf die Sechskantwelle aufgesteckt und durch den an der Lagerplatte vorhandenen Auflagervorsprung wirksam abgestützt werden, wodurch das Fusspedal und die Sechskantwelle gegen zu robuste Betätigung des Fusspedals geschützt werden. Zur axialen Sicherung des Fusspedals auf der Sechskantwelle sind an seiner Nabe Rastvorsprünge, z.B. Auflagerrippen vorhanden, während am Auflagervorsprung eine damit in Rasteingriff zu bringende Gegenrast, z.B. eine ausgeprägte Sicke vorhanden ist. Das Fusspedal braucht also mit der in seiner Nabe vorhandenen Innensechskantöffnung nur auf das Ende der Sechskantwelle aufgesteckt zu werden, woraufhin durch den vorerwähnten Rasteingriff ein ungewolltes axiales Abziehen ausgeschlossen wird. Vielmehr muss dazu das Fusspedal mit dem Sechskantwellenende leicht vom Rastvorsprung abgebogen werden.

Das für die Neuerung charakteristische Steckverbindungsprinzip bleibt auch gewahrt, wenn es sich in bestimmten Anwendungsfällen als notwendig erweisen sollte, dass das Fusspedal bzw. die damit verbundene Sechskantwelle in ihrer Feststellposition zu arretieren und zum Zurückbringen der vorerwähnten Feststellelemente eine Rückstellfeder zu verwenden. Für diesen Fall kann auf die Sechskantwelle insbesondere in der Nähe des in seiner Feststellposition zu verrastenden Fusspedals ein mit einer entsprechenden Innensechskantöffnung versehener Rückstellfedernocken aufgesteckt sein, der mit einer um ihn spiralig herumgewundenen Blattfeder versehen ist, die mit ihrem freien Ende auf einem auf der Lagerplatte vorhandenen Arretierbolzen aufgesteckt ist. Somit können auch im vorliegenden Fall ausser der Sechskantwelle sowohl deren Schutzmantel als auch deren Fusspedal und deren Rückstellfeder durch blosses Zusammenstecken funktionsmässig miteinander verbunden werden, was die Montage dieser Teile ausserordentlich erleichtern hilft.

In der Zeichnung sind mehrere Ausführungsbeispiele von zentralen Feststellvorrichtungen nach der Neuerung dargestellt. Dabei zeigen:

Fig. 1 eine erste Ausführungsform in teilweise geschnittener Ansicht,

Fig. 2 eine Ansicht in Pfeilrichtung A der Fig. 1,

Fig. 3 und 4 Schnitte nach den Linien III–III bzw. IV–IV der Fig. 1,

Fig. 5 eine Draufsicht auf die Feststellvorrichtung der Fig. 1,

Fig. 6 und 7 zwei weitere Ausführungsformen der Feststellvorrichtung in der Draufsicht,

Fig. 8 eine vierte Ausführungsform in der Seitenansicht,

Fig. 9 und 10 jeweils einen Schnitt nach der Linie IX–IX der Fig. 8 in Löse- bzw. Feststell-Position der Sechskantwelle und

Fig. 11 und 12 jeweils Draufsichten in Pfeilrichtung B der Fig. 8, wiederum mit in Löse- und Feststellposition befindlichen Rollen bzw. des Fusspedals.

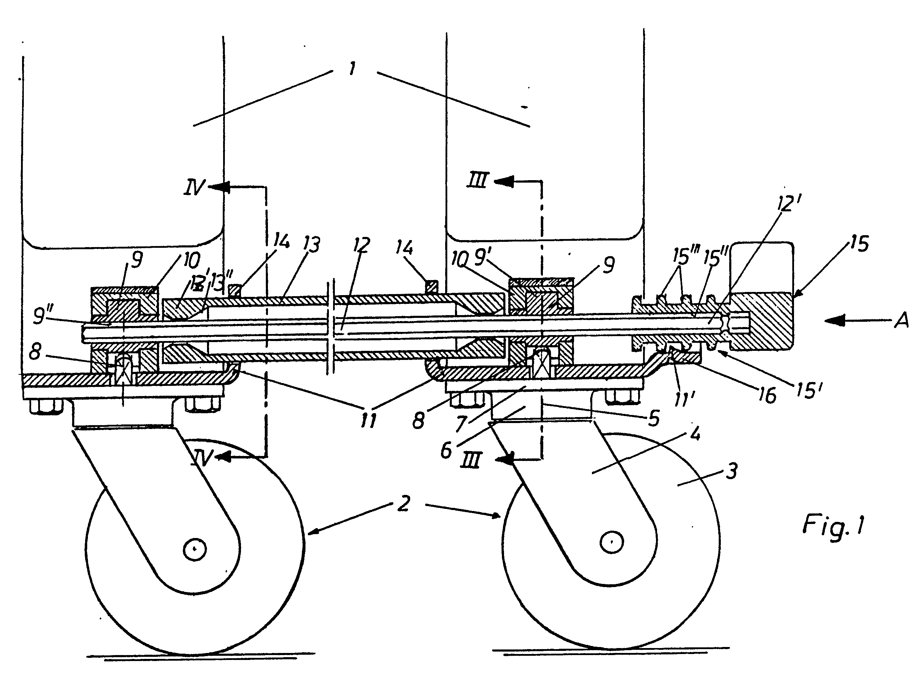

Gemäss dem in den Fig. 1 bis 5 dargestellten Ausführungsbeispiel sind an dem nur umrisshaft dargestellten verfahrbaren Behälter 1 die Lenkrollen 2 befestigt, von denen im vorliegenden Fall nur die beiden in Längsrichtung des Behälters hintereinander liegenden Rollen dargestellt sind. Jede dieser Lenkrollen ist in bekannter Weise mit einer das Rad 3 tragenden Lenkgabel 4 versehen, die um eine vertikale Achse 5 über nicht dargestellte Kugellager im Schwenklager 6 schwenkverstellbar gelagert ist. Im topfartig ausgebildeten Rollen-Schwenklager ist weiterhin eine Feststelleinrichtung vorgesehen, mittels deren sowohl die Rollbewegung des Laufrades 3 als auch die Schwenkbeweglichkeit der Lenkgabel 4 blockiert werden kann. Zur Betätigung dieser Feststelleinrichtung dient der das Rollen-Schwenklager 6 zentral durchdringende und über ihre Schraubbefestigungsplatte 7 nach oben hinaus ragende Stellbolzen 8. Zu dessen Betätigung dient die mit einem entsprechenden Exzenternocken 9' versehene Betätigungsnuss 9, die in einem Lagerkopf 10 drehbeweglich gelagert ist, der seinerseits auf der auf der Schraubbefestigungsplatte 7 aufliegenden und mit ihr gemeinsam an einer nicht näher dargestellten Konsolenplatte des Behälters 1 zu befestigenden Lagerplatte 11 angebracht ist.

Beide Betätigungsnüsse 9 sind mit einer Innensechskantöffnung 9'' versehen, durch die ihre gemeinsame Betätigung gewährleistende Sechskantwelle 12 hindurchgesteckt ist. Zwischen den beiden Lagerköpfen 10 ist ein die Sechskantwelle 12 umgebendes Schutzmantelrohr 13 angeordnet, das in an den einander zugewandten Enden der Lagerplatten 11 vorhandenen und daraus durch einfaches Abwinkeln und Ausstanzen gebildeten ringförmigen Einsteckhalterungen 14 gelagert ist. Durch dieses Schutzmantelrohr 13 wird die in ihrem Durchmesser verhältnismässig kleine und daher gegen Verbiegungen u.dgl. nicht unempfindliche Sechskantwelle 12 wirksam geschützt.

Auf das eine Ende 12' der Sechskantwelle 12 ist das Fusspedal 15 mit der in seiner Nabe 15' vorhandenen Innensechskantöffnung 15'' aufgesteckt. An der Lagerplatte 11 der zugehörigen Lenkrolle ist ein Auflagevorsprung 16 vorhanden, auf dem das Fusspedal 15 mit seiner Nabe 15' aufliegt und dadurch auch gegen übermässige starke Fussbetätigungsstösse, die ansonsten zu einem Verbiegen des Fusspedals und/oder der Sechskantwelle 12 führen könnten, wirksam geschützt wird. Die Nabe 15' am Fusspedal 15 ist noch mit mehreren Rastvorsprüngen in Form der Rippen 15''' versehen, die mit der an der Lagerplatte 11 vorhandenen Gegenrast in Gestalt der ausgeprägten Sicke 11' das axiale Abziehen des Fusspedals 15 von der Sechskantwelle 12 verhindern.

Die Montage der vorbeschriebenen Feststellvorrichtung ist, wie ohne weiteres ersichtlich, ausserordentlich einfach, weil dazu die einzelnen Vorrichtungsteile nur ineinander gesteckt zu werden brauchen. Um dabei das Durchstecken der Sechskantwelle 12 durch das Schutzmantelrohr 13 zu erleichtern, ist letzteres an seinen im Innendurchmesser verengten Durchtrittsenden 13' jeweils mit einem Innenkonus 13'' versehen. Beim Aufschieben des Fusspedals 15 auf das Ende 12' der Sechskantwelle kommt es zur selbsttätigen Verrastung des Fusspedals.

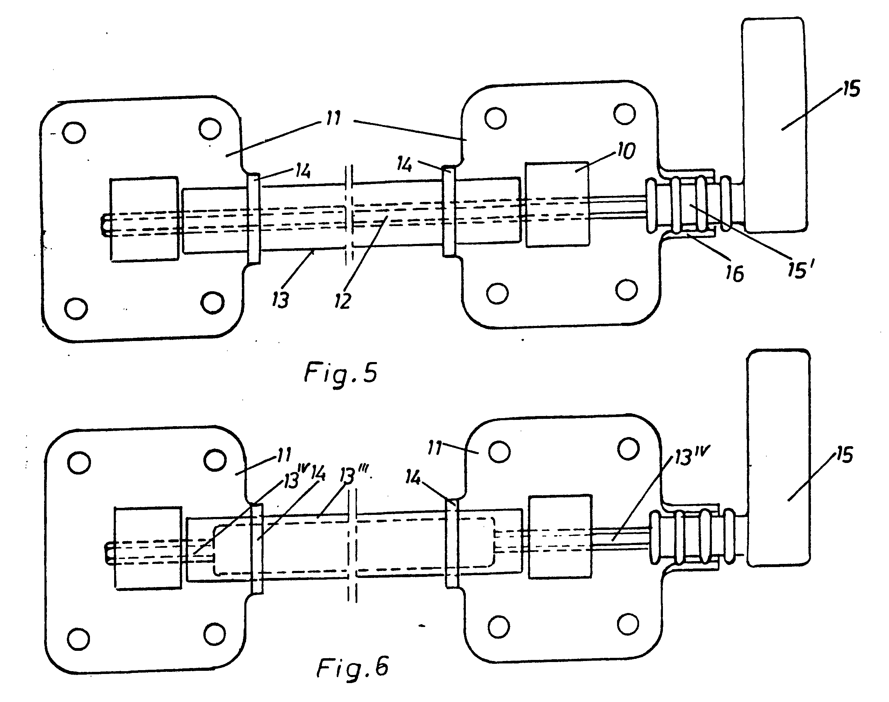

Wie Fig. 6 zeigt, kann die vorbeschriebene Feststellvorrichtung dahin abgewandelt werden, dass das Schutzmantelrohr 13''', das nach wie vor in den ringförmigen Einsteckhaltungen 14 der Lagerplatten 11 drehbeweglich gelagert ist, an seinen Enden mit daran angebrachten, koaxial zu einander liegenden Sechskant-Endstücken 13$^{IV}$ versehen ist, mit denen zusammen es die schutzmantelverstärkte Sechskantwelle bildet, wobei auf das eine Ende wiederum das Fusspedal 15 in der vorher schon beschriebenen und dargestellten Weise einfach aufgesteckt, abgestützt und gegen axiales Abziehen gesichert werden kann. Auch hier sind die Teile durch blosses Zusammenstecken miteinander zu verbinden.

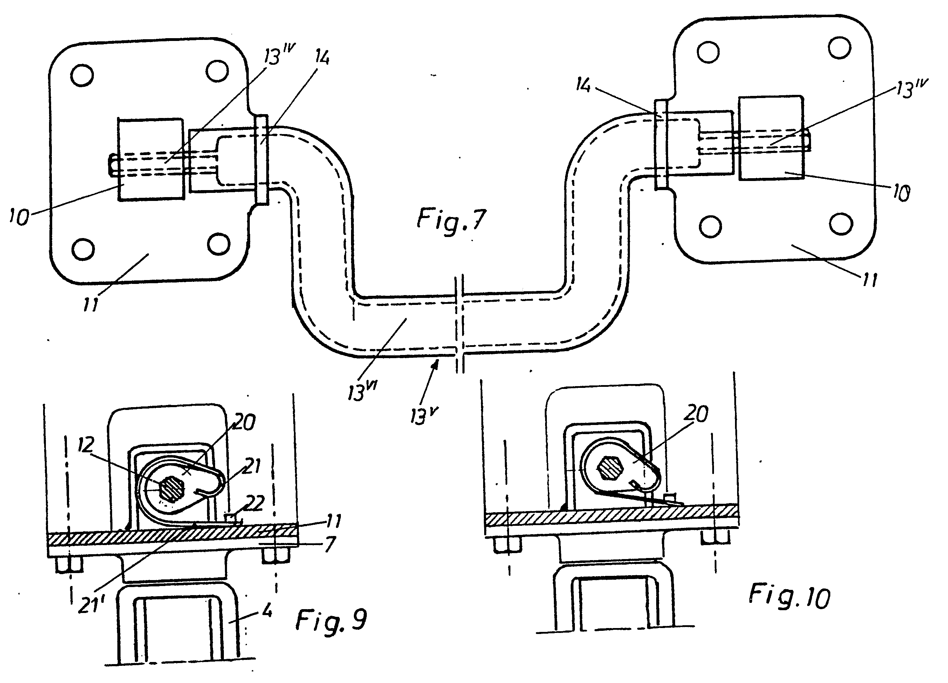

Im Falle der Fig. 7 ist das Schutzmantelrohr 13$^V$ zwischen seinen auch hier wiederum die Sechskantendstücke 13$^{IV}$ tragenden Lagerenden, die in den ringförmigen Einsteckhalterungen 14 lagern, mit einer U-förmigen Kröpfung 13$^{VI}$ versehen, die hier als Fusspedal dient.

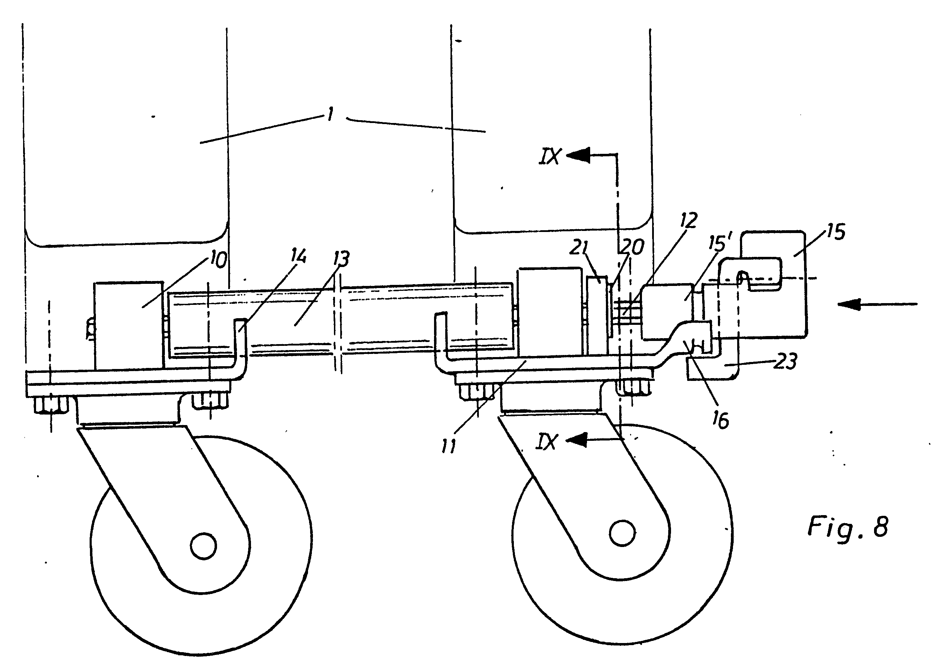

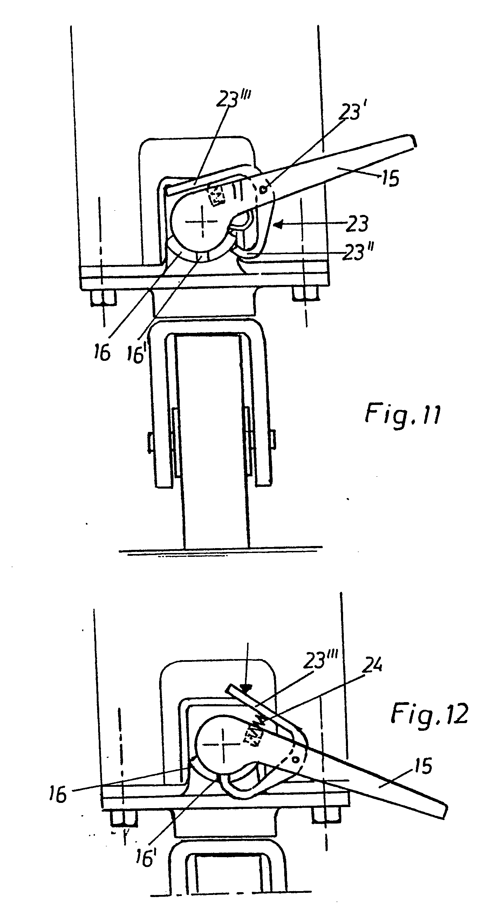

Die in den Fig. 8 bis 12 dargestellte Feststellvorrichtung ist von prinzipiell gleicher Beschaffenheit wie die in den Fig. 1 bis 5 dargestellte, wobei die übereinstimmenden Teile mit den gleichen Bezugszeichen versehen sind. Zusätzlich ist hier aber auf die Sechskantwelle 12 ein mit einer entsprechenden Innensechskantöffnung versehener Rückstellfedernocken 20 aufgesteckt, der mit einer um ihn spiralig herumgewundenen Blattfeder 21 versehen ist, die mit ihrem freien Ende 21' auf einem auf der Lagerplatte 11 vorhandenen Arretierbolzen 22 aufgesteckt ist. Weiterhin ist hier auf das Ende der Sechskantwelle 12 aufgesteckte Fusspedal 15 in seiner Feststellposition zu verrasten. Zu diesem Zweck ist am Fusspedal 15, wie insbesondere die Fig. 11 und 12 zeigen, ein dessen Nabe 15' teilweise gabelartig umgreifender, doppelarmiger Rasthebel 23 an der Stelle 23' schwenkbeweglich gelagert. Mit seinem unteren hakenförmig gebogenen Haltearmende 23'' liegt dieser Rasthebel am Auflagervorsprung 16 der Lagerplatte 11 an, und zwar unter Wirkung der am anderen Hebelarm 23''' angreifenden Druckfeder 24. In der in Fig. 12 dargestellten herabgeschwenkten Feststellposition des Fusspedals 15 springt aber das hakenförmig gebogene Haltearmende 23'' in die am Vorsprung 16 vorhandene Aussparung 16' ein, wodurch es zur Verrastung des Pedals 15 kommt. Die beiden Lenkrollen sind dadurch über die entsprechend verschwenkte Sechskantwelle 12, die Betätigungsnüsse 9 und die Stellbolzen 8 sowohl in ihrer Roll- als auch Schwenkbeweglichkeit blockiert. Soll diese Blockierung gelöst werden, so braucht dazu lediglich durch leichten Fussdruck auf den als Lösepedal dienenden Hebelarm 23''' der Rasthebel 23 verschwenkt zu werden, wodurch das Fusspedal 15 nach oben in die in Fig. 11 dargestellte Löseposition schwenken kann.

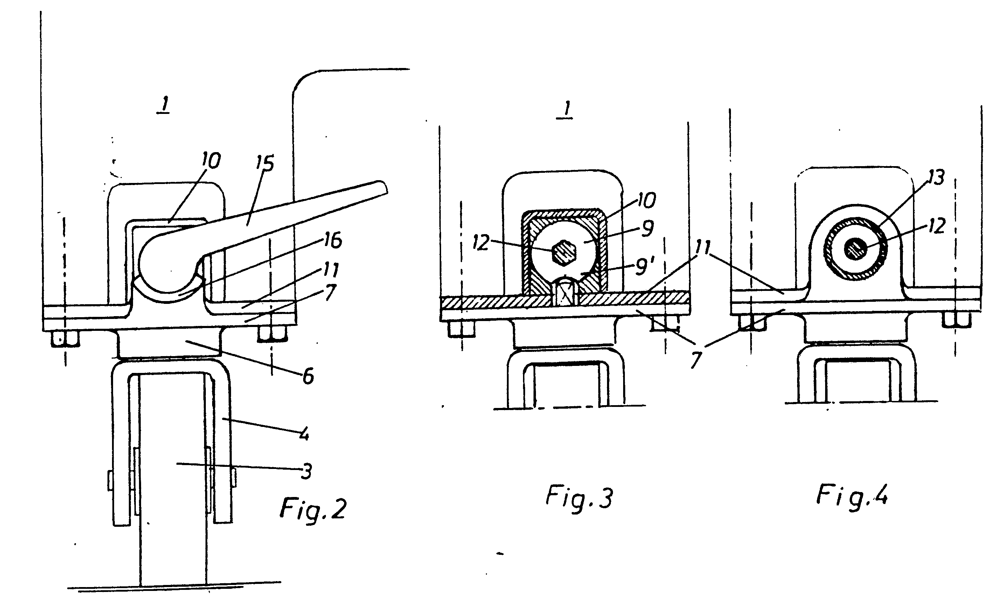

Die vorbeschriebene Verrastung des Fusspedals und die Rückstellfederung sind grundsätzlich nur dann notwendig, wenn die an den Betätigungsnüssen 9 vorhandenen Exzenternocken 9' so gestaltet sind, dass sie nicht wie bei dem in Fig. 3 dargestellten Ausführungsbeispiel in der Feststellposition eine Totpunktlage gegenüber dem Stellbolzen 8 einnehmen, sondern nur kraftschlüssig die Stellbolzen 8 niederhalten und im übrigen die in den meisten Rollen-Schwenklagern ohnehin vorhandene, den Stellbolzen 8 in seine Löseposition bringende Rückstellfeder zu schwach ist, um auch das Feststellgestänge in die Löseposition zurückzuführen.

**Patentansprüche**

1. Zentrale Feststellvorrichtung für an verfahrbaren Geräten, Behältern od.dgl. zu befestigenden Lenk- oder Bockrollen (2), die mit je einem das Rollen-Schwenklager zentral durchdringenden und über ihre Befestigungsplatte nach oben hinausragenden Stellbolzen (8) sowie einer letzteren vertikal verstellenden, in einem an einer auf der Befestigungsplatte angebrachten Lagerplatte (11) vorhandenen Lagerkopf drehbeweglich gelagerten Betätigungsnuss (9) mit Exzenternocken und Innensechskantöffnung versehen sind, wobei eine die zu zwei hintereinander liegenden Lenk- oder Bockrollen gehörenden Betätigungsnüsse miteinander verbindende, durch deren Innensechskantöffnungen hindurchgesteckte Sechskantwelle (12) mit einem Fusspedal und einem zwischen den Lagerköpfen der beiden Rollen gelegenen Schutzmantel (13) für die Sechskantwelle vorhanden ist, dadurch gekennzeichnet, dass der Schutzmantel (13) rohrförmig ausgebildet und in an den einander zugewandten Enden der Lagerplatten (11) vorhandenen, abgewinkelten ring- oder teilringförmigen Einsteckhalterungen (14) gelagert ist.

2. Feststellvorrichtung nach Anspruch 1, dadurch gekennzeichnet, dass das Schutzmantelrohr (13) die durchgehende Sechskantwelle (12) konzentrisch umgibt und an seinen im Innendurchmesser verengten Durchtrittsenden (13') jeweils mit einem Innenkonus (13'') für das leichtere Durchstecken der Sechskantwelle (12) versehen ist (Fig. 1).

3. Feststellvorrichtung nach Anspruch 2, dadurch gekennzeichnet, dass das Schutzmantelrohr (13''') mit an seinen Enden angebrachten, koaxial zueinander liegenden Sechskant-Endstükken (13$^{IV}$) versehen ist, mit denen zusammen es die schutzmantelverstärkte Sechskantwelle bildet (Fig. 6, 7).

4. Feststellvorrichtung nach einem der Ansprüche 1 bis 3, dadurch gekennzeichnet, dass das Fusspedal (15) mit einer eine Innensechskantöffnung (15'') aufweisenden Nabe (15') versehen und darüber auf das eine Ende (12') der Sechskantwelle (12) aufgesteckt und zugleich an einem an der Lagerplatte (11) vorhandenen Auflagervorsprung (16) abgestützt ist (Fig. 1, 8).

5. Feststellvorrichtung nach Anspruch 4, dadurch gekennzeichnet, dass das Fusspedal (15) durch an seiner Nabe (15') vorhandene Rastvorsprünge, z.B. Auflagerrippen (15'''') und eine damit in Rasteingriff zu bringende Gegenrast am Auflagervorsprung (16), z.B. eine daraus ausgeprägte Sicke (11') gegen axiales Abziehen von der Sechskantwelle (12) gesichert ist (Fig. 1, 8).

6. Feststellvorrichtung nach Anspruch 3, dadurch gekennzeichnet, dass das Schutzmantelrohr (13$^V$) zwischen seinen Lagerenden zur Bildung des Fusspedals eine U-förmige Kröpfung (13$^{VI}$) aufweist (Fig. 7).

7. Feststellvorrichtung nach einem der Ansprüche 1 bis 6, dadurch gekennzeichnet, dass auf die Sechskantwelle (12) insbesondere in der Nähe des in seiner Feststellposition zu verrastenden Fusspedals (15) ein mit einer entsprechenden Innensechskantöffnung versehener Rückstellfedernocken (20) aufgesteckt ist, der mit einer um ihn spiralig herumgewundenen Blattfeder (21) versehen ist, die mit ihrem freien Ende (21') auf einen auf der Lagerplatte (11) vorhandenen Arretierbolzen (22) aufgesteckt ist (Fig 9, 10).

8. Feststellvorrichtung nach Anspruch 7, dadurch gekennzeichnet, dass am Fusspedal (15) ein dessen Nabe (15') teilweise gabelartig umgreifender, doppelarmiger Rasthebel (23) schwenkbeweglich gelagert ist, der mit seinem unteren hakenförmig gebogenen Haltearmende (23'') in der Löseposition des Rasthebels (23) am Auflagervorsprung (16) der Lagerplatte (11) anliegt, dagegen in der Feststellposition in eine darin vorhandene Aussparung (16') einzuspringen vermag, in der er durch eine an seinem anderen, als Lösepedal dienenden Hebelarm (23''') angreifende Druckfeder (24) zu halten ist (Fig. 11, 12).

**Claims**

1. Central locking device for castor wheels or support wheels (2) to be attached to mobile equipment, containers or the like, the device comprising, for each wheel, an operating pin (8) extending centrally through the wheel pivot bearing and projecting upwardly through its fastening plate, and an actuating nut (9) with eccentric cam and internal hexagonal hole, the nut moving the operating pin vertically and being mounted for rotational movement in a bearing head provided on a bearing plate (11) secured to the fastening plate, wherein one of the actuating nuts pertaining to two castor or support wheels to be connected to each other in tandem by a hexagonal shaft (12) fitted through their respective internal hexagonal holes is provided with a foot-pedal and a protective sleeve (13) for the hexagonal shaft between the bearing heads of the two wheels, characterised in that the protective sleeve (13) is tubular and is mounted in ring-shaped or part-ring-shaped receiving holders (14) formed as flanges provided at the ends of the bearing plates (11) which face each other.

2. Locking device according to claim 1, characterised in that the protective sleeve tube (13) concentrically surrounds the hexagonal shaft (12) which extends therethrough, and at each of its ends (13'), which are reduced in internal diameter, is provided with an internal taper (13'') to facilitate the push fitting of the hexagonal shaft (12) (Fig. 1).

3. Locking device according to claim 2, characterised in that the protective sleeve tube (13''') is provided with coaxial hexagonal end-pieces (13$^{IV}$) fitted to its ends, the combination forming the protective sleeve reinforced hexagonal shaft (Figs. 6, 7).

4. Locking device according to one of claims 1 to 3, characterised in that the foot-pedal (15) is provided with a boss (15') having an internal hexagonal hole (15'') therethrough and is fitted by means of said hole on to the one end (12') of the hexagonal shaft (12), and is supported also on a supporting projection (16) provided on the bearing plate (11) (Figs. 1, 8).

5. Locking device according to claim 4, characterised in that the foot-pedal (15) is secured against axial withdrawal from the hexagonal shaft (12) by latching projections, e.g. bearing ribs (15'''), provided on its boss (15') and by an associated latch, e.g. a prominent fin (11'), on the supporting projection (16) and engageable with the latching projections (Figs. 1, 8).

6. Locking device according to claim 3, characterised in that the protective sleeve tube (13$^V$) has a U-shaped cranked portion (13$^{VI}$) between its bearing ends, to form the foot-pedal (Fig. 7).

7. Locking device according to one of claims 1 to 6, characterised in that a restoring spring cam (20) provided with a corresponding internal hexagonal hole is fitted on to the hexagonal shaft (12), particularly in the region of the foot-pedal (15) to be latched in its locked position, said cam being provided with a leaf spring (21) wound helically around it, with the free end (21') of the spring being held by a retaining pin (22) provided on the bearing plate (11) (Fig. 9, 10).

8. Locking device according to claim 7, characterised in that on the foot-pedal (15) there is pivotally mounted a double-armed latching lever (23) which partially encircles its boss (15') in the manner of a fork, said lever having its lower, hook-shaped, curved retaining arm end (23'') in contact with the supporting projection (16) of the bearing plate (11) in the release position of the latching lever (23), whereas in the locking position said arm end snaps into a recess (16') in the supporting projection, in which it is held by a compression spring (24) acting against the other lever arm (23''') which serves as a release pedal (Figs. 11, 12).

## Revendications

1. Dispositif de blocage central pour des roulettes à pivot (2) destinées à être fixées à des appareils mobiles, récipients mobiles ou équivalents, et dont chacune est munie d'un doigt d'actionnement (8) qui traverse en position centrale le palier d'orientation de la roulette et qui fait saillies vers le haut, au-delà de sa plaque de fixation, ainsi que d'une noix de manœuvre (9) qui sert à déplacer ce doigt verticalement et qui est montée en rotation dans une tête-palier portée par une plaque porte-palier (11) fixée à la plaque de fixation, cette noix de manœuvre comportant une came excentrique et présentant une ouverture hexagonale, dispositif dans lequel il est prévu un arbre hexagonal (12) qui relie entre elles les noix de manœuvre appartenant à deux roulettes situées l'une derrière l'autre et qui est enfilé à travers l'ouverture hexagonale de ces noix, cet arbre hexagonal étant muni d'une pédale et d'un fourreau (13) qui lui sert de protection et qui est disposé entre les tête-paliers des deux roulettes, caractérisé en ce que le fourreau de protection (13) est de forme tubulaire et tourillonne dans des supports d'emmanchement (14) coudés annulaires ou partiellement annulaires, prévus aux extrémités, tournées l'une vers l'autre, des plaques portepaliers (11).

2. Dispositif de blocage selon la revendication 1, caractérisé en ce que le tube formant fourreau de protection (13) entoure concentriquement l'arbre hexagonal (12) continu et est muni, à chacune de ses extrémités de traversée (13') de diamètre intérieur réduit, d'un cône intérieur (13'') qui facilite l'enfilage de l'arbre hexagonal (12) (figure 1).

3. Dispositif de blocage selon la revendication 2, caractérisé en ce que le tube fourreau de protection (13''') est muni d'embouts hexagonaux (13$^{IV}$) montés à ses extrémités et disposés coaxialement entre eux, pour former conjointement avec eux l'arbre hexagonal renforcé par un fourreau de protection (figures 6 et 7).

4. Dispositif de blocage selon l'une des revendications 1 à 3, caractérisé en ce que la pédale (15) est munie d'un moyeu (15') présentant une ouverture intérieure hexagonale (15'') et, au moyen de ce moyeu, elle s'emmanche sur l'une des extrémités (12') de l'arbre hexagonal (12) et prend en même temps appui sur une saillie de portée (16) présente sur la plaque porte-palier (11) (figures 1 à 8).

5. Dispositif de blocage selon la revendication 4, caractérisé en ce que la pédale (15) est retenue contre un déboîtement axial par rapport à l'arbre hexagonal (12), par des saillies d'arrêt, par exemple, des côtes de portée (15''') prévues sur ce moyeu (15') et par un contre-arrêt, par exemple un embouti, formé dans la saillie de portée et destiné à être amené en prise de verrouillage avec ces saillies d'arrêt (figures 1, 8).

6. Dispositif de blocage selon la revendication 3, caractérisé en ce que le tube fourreau de protection (13$^V$) présente, entre ses extrémités de portée, un contre-coude en U (13$^{VI}$) qui forme la pédale (figure 7).

7. Dispositif de blocage selon l'une des revendications 1 à 6, caractérisé en ce que, sur l'arbre hexagonal (12), en particulier au voisinage de la pédale (15) qui doit être verrouillée dans sa position de blocage, est emboîtée une came à ressort de rappel (20) présentant une ouverture hexagonale correspondante et sur laquelle une lame de ressort (21) est enroulée en spirale, cette lame étant accrochée, par son extrémité libre (21'), sur un ergot d'accrochage (22) prévu sur la plaque portepalier (11) (figures 9, 10).

8. Dispositif de blocage selon la revendication 7, caractérisé en ce qu'un levier de verrouillage à deux bras (23) est articulé sur la pédale (15), en encadrant partiellement son moyeu (15') à la façon d'une fourche, ce levier s'appuyant contre la saillie de portée (16) de la plaque porte-palier (11) par l'extrémité inférieure (23'') de son bras de retenue qui est recourbée en forme de crochet, dans la position de déblocage du levier de verrouillage (23) tandis que, dans la position de blocage, il peut encliqueter dans un évidement (16') ménagé dans cette saillie, et dans lequel il est retenu par un ressort de compression (24) qui attaque son autre bras (23''') lequel sert de pédale de déblocage (figures 11, 12).

*Fig.1*

Fig. 2

Fig. 3

Fig. 4

EP 0 141 270 B1

Fig. 5

Fig. 6

Fig.7

Fig.9

Fig.10

13

Fig. 8

Fig. 11

Fig. 12